# FASCICULE DE BREVET EUROPEEN

(11) **EP 2 363 825 B1**
(45) Date de publication et mention de la délivrance du brevet: **27.04.2016**
(21) Numéro de dépôt: 11001493.3
(22) Date de dépôt: 23.02.2011
(51) Int. Cl.: G06K 7/00, G06K 19/07

(54) **Procédé pour conduire une transaction au moyen d'un dispositif NFC**
Verfahren zum Durchführen einer Transaktion mit Hilfe einer NFC-Vorrichtung
Method for conducting a transaction by means of an NFC device

(30) Priorité: 04.03.2010 FR 1000871; 17.03.2010 US 725933
(43) Date de publication de la demande: 07.09.2011
(73) Titulaire: Inside Secure, 13590 Meyreuil (FR)
(72) Inventeur: Soh, Kian Teck, S552506 Singapore (SG); Blanchet, Jean-Bernard, 13100 Aix En Provence (FR)
(74) Mandataire: Marchand, André

(56) Documents cités:
- US-A1- 2008 006 695

## Description

La présente invention concerne les transactions sans contact conduites au moyen d'un contrôleur NFC couplé à au moins un processeur hôte.

La technologie NFC est actuellement développée par un consortium industriel regroupé sous le nom de Forum NFC (http://www.nfc-forum.org). La technologie NFC est dérivée de la technologie RFID (Radio Frequency Identification) et utilise des contrôleurs NFC présentant plusieurs modes de fonctionnement, notamment un mode lecteur ("Reader Mode") et un mode émulation de carte ("Card emulation").

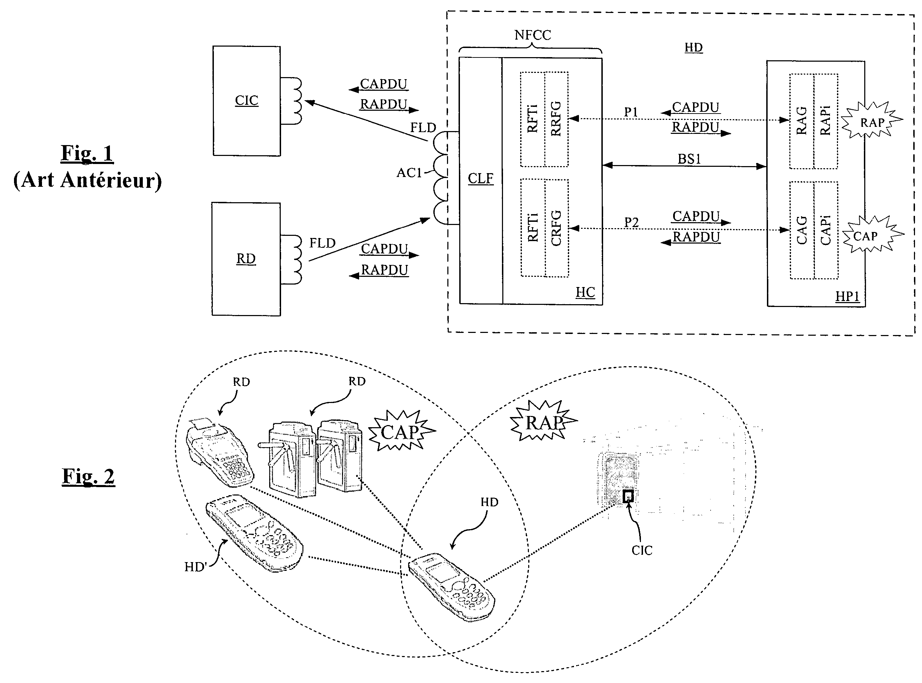

La figure 1 représente un dispositif NFC généralement appelé "chipset NFC" (ensemble de puces) comprenant un contrôleur NFC référencé NFCC et au moins un processeur hôte processeur HP1 relié au contrôleur NFCC par un bus BS1, par exemple de type SWP ("Single Wire Protocol"). Le processeur hôte peut prendre la forme d'une carte à circuit intégré désignée UICC ("Universal Integrated Circuit Card"), telle une carte SIM (Subscriber Identity Module). Le processeur hôte peut aussi être le processeur de bande de base ("Baseband") d'un téléphone mobile (soit le processeur en charge des communications téléphoniques). Les ressources du contrôleur NFCC sont mises à la disposition du processeur hôte HP1 pour lui permettre de gérer des applications sans contact. Le contrôleur NFCC comprend un contrôleur hôte HC et une interface sans contact CLF ("Contactless Front End Interface") équipée d'une bobine d'antenne AC1. En pratique, le contrôleur hôte HC et l'interface CLF peuvent être réalisés sur la même puce de semi-conducteur, telle la puce MicroRead® commercialisée par la demanderesse, ou être formés de deux puces distinctes, telle les puces "PicoRead® Microcontroller" et "PicoRead® RF Interface" commercialisées par la demanderesse.

L'interface CLF du contrôleur NFCC peut généralement fonctionner selon plusieurs technologies RF, désignées RFTi sur la figure 1, par exemple "Type A" ou "Type B" telles que définies par ISO/IEC 14443 parties 2, 3 et 4, "Type B'" telle que définie par ISO/IEC 14443-2 avec un tramage normalisé ("standard framing") telle que défini par ISO/IEC 14443-3, et "Type F" telle que définie par ISO 18092 en tant que mode passif à 212 et 424 kops (kilo octets par seconde) ou par la norme industrielle japonaise JIS X 6319-4. Chaque technologie RF, ou protocole de communication sans contact, définit une fréquence d'émission du champ magnétique, une méthode de modulation du champ magnétique pour transmettre des données en mode actif, une méthode de modulation de charge pour transmettre des données en mode passif, une méthode de codage des données, un format de trame de données, etc.

En raison de ses capacités de communication étendues, un tel dispositif NFC est généralement intégré dans un dispositif portatif HD ("Handheld Device") tel un téléphone portable, un PDA (Assistant Numérique Personnel), etc. Des exemples d'application du dispositif NFC sont illustrés sur la figure 2 qui représente un dispositif portatif HD équipé du dispositif NFC de la figure 1, le dispositif HD prenant ici la forme d'un téléphone mobile. On distingue des applications lecteur RAP ("Reader Applications") et des applications carte CAP ("Card Applications")

### Applications lecteur (RAP)

Le contrôleur NFCC fonctionne comme un lecteur NFC pour conduire une transaction avec un circuit intégré sans contact CIC ("Contactless Integrated Circuit"). Une application lecteur RAPi est exécutée par le processeur hôte HP1 (Cf. Fig. 1). Ce dernier place l'interface CLF dans un mode de fonctionnement actif où elle émet un champ magnétique FLD, envoie des données par modulation du champ magnétique et reçoit des données par modulation de charge et couplage inductif. Ce type d'application peut être gratuit (par exemple lecture d'une étiquette électronique ou "tag" présente dans un abribus contenant les horaires des lignes de bus) et être exécutée par un processeur non sécurisé. Le processeur hôte HP1 peut dans ce cas être le processeur de bande de base du téléphone mobile. S'il s'agit d'une application payante, le processeur hôte HP1 est de préférence un processeur sécurisé, par exemple un processeur de carte SIM, car l'accès au service nécessite une identification de l'abonné.

### Applications carte (CAP)

Le principe de fonctionnement du mode émulation de carte est décrit par le brevet EP 1 327 222 (US 7 098 770) au nom de la demanderesse. Une application carte (CAPi) est exécutée par le processeur hôte HP1 (Cf. Fig. 1). Ce dernier place le contrôleur NFCC dans un mode de fonctionnement passif et forme, avec le contrôleur NFCC, l'équivalent d'un circuit intégré sans contact, qui est vu par un lecteur RD comme une carte sans contact. Ainsi, le contrôleur NFCC n'émet pas de champ magnétique, reçoit des données en démodulant un champ magnétique FLD émis par le lecteur RD et émet des données par modulation de l'impédance de son circuit d'antenne (modulation de charge). Les applications concernées sont généralement des applications au paiement ou au contrôle d'accès payant (machine de paiement, entrée de métro, etc.). Le dispositif portatif HD est donc utilisé dans ce cas comme une carte à puce. Ce type d'application est le plus souvent sécurisé et le processeur hôte HP1 qui exécute le programme application est dans ce cas un processeur sécurisé, par exemple un processeur de carte SIM.

### Architecture normalisée d'un dispositif NFC

A l'intérieur du dispositif NFC, le bus BS1 supporte généralement une interface de communication dite HCI ("Host Controller Interface") par l'intermédiaire de laquelle le contrôleur NFCC et le processeur hôte HP1 échangent des données conformément au protocole HCP ("Host Controller Protocol"). Ce protocole prévoit un routage des données selon des canaux de routage appelés "pipes" ("tuyaux") décrits dans les demandes EP 1 855 229 (US 2007/0263595) ou EP 1 855 389 (US 2007/0263596) au nom de la demanderesse.

L'interface HCI et le protocole HCP sont également décrits dans les spécifications ETSI TS 102 622 de l'Institut Européen des Normes de Télécommunication, intitulées "Smart Cards; Universal Integrated Circuit Card (UICC); Contactless Front-end (CLF) interface; Host Controller Interface (HCI)". Par ailleurs, les commandes et les réponses à des commandes échangées au cours d'une transaction entre le processeur hôte HP1 et un dispositif externe, tel quel que le circuit intégré sans contact passif CIC ou le lecteur RD, sont définies par les spécifications NFCForum-TS-Type-4-Tag intitulées "Type 4 Tag Operation". Également, le format des données échangées au cours d'une transaction NFC est défini par les spécifications NFCForum-TS-NDEF intitulées "NFC Data Exchange Format (NDEF)".

Comme illustré sur la figure 1, ces diverses spécifications définissent une architecture de dispositif NFC dans laquelle le contrôleur NFCC exécute une ou plusieurs technologies RFTi (modes de fonctionnement de l'interface CLF, par exemple Type A, Type B, Type B' et Type F) tandis que le processeur hôte HP1 exécute des applications lecteur RAPi et des applications carte CAPi. Chaque technologie RFTi est accessible par l'intermédiaire d'une porte de lecteur RF RRFG ("Reader RF Gate") ou d'une porte de carte RF CRFG ("Card RF Gate"). Chaque application lecteur RAPi comporte une porte d'application lecteur RAG ("Reader Application Gate") qui est connectée par l'intermédiaire d'un canal ("pipe") à une porte de lecteur RF RRFG associée à une technologie RFTi. De même, chaque application carte CAPi comporte une porte d'application carte CAG ("Card Application Gate") qui est connectée par l'intermédiaire d'un canal ("pipe") à une porte de carte RF CRFG associée à une technologie RFTi. A chaque porte de lecteur RRFG ou de carte CRFG est associé un registre appelé "registry" qui contient des paramètres nécessaires à la gestion du canal RF selon la technologie RFTi que l'application lecteur ou l'application carte utilise.

### Commandes échangées lors de l'exécution d'une application lecteur

Lors de l'exécution d'une application lecteur RAPi, le processeur hôte HP1 configure l'interface CLF en mode actif par l'intermédiaire d'une porte d'application lecteur RAG. L'application lecteur RAPi active une porte RAG sollicite de l'administrateur HCI (organe logiciel exécuté par le contrôleur NFCC) l'ouverture d'un canal P1 entre la porte RAG et une porte RRFG associée à une technologie RFTi qu'elle veut utiliser. L'application RAPi émet ensuite des commandes CAPDU qui sont transmises au contrôleur NFCC par l'intermédiaire du canal P1 puis sont transmises au circuit intégré CIC par l'intermédiaire d'un canal RF. Le circuit intégré sans contact CIC renvoie au contrôleur NFCC des réponses RAPDU que ce dernier transmet au processeur hôte HP1 par l'intermédiaire du canal P1.

### Commandes échangées lors de l'exécution d'une application carte

Lors de l'exécution d'une application carte CAPi, le processeur hôte HP1 émule une carte sans contact passive et utilise l'interface CLF en mode passif. L'application carte CAPi active une porte CAG et sollicite de l'administrateur HCI l'ouverture d'un canal P2 entre la porte CAG et une porte CRFG associée à une technologie RFTi qu'elle veut utiliser. Le lecteur RD envoie au contrôleur NFCC des commandes CAPDU que ce dernier transmet au processeur hôte HP1 par l'intermédiaire du canal P2. Le processeur hôte HP1 émet des réponses RAPDU qui sont transmises au contrôleur NFCC par l'intermédiaire du canal P2, puis sont transmises au lecteur RD par le contrôleur NFCC, par l'intermédiaire d'un canal RF.

Les commandes CAPDU et les réponses RAPDU (habituellement désignées "C-APDU" et "R-APDU") sont définies par la norme ISO 7816-4 et sont précisées au point 5 des spécifications "Type 4 Tag Operation".

En résumé, dans l'état de la technique, le processeur hôte HP1 émet des commandes CAPDU lorsqu'il fonctionne en mode lecteur et conduit une transaction avec un circuit intégré sans contact CIC, et le circuit intégré sans contact CIC renvoie des réponses RAPDU au processeur hôte. Inversement, lorsqu'il fonctionne en mode émulation de carte, le processeur hôte HP1 reçoit des commandes CAPDU émises par un lecteur RD et renvoie des réponses RAPDU au lecteur RD.

Le document US 2008/0006695 décrit un circuit intégré sans contact associé à un générateur de champ magnétique. Le circuit intégré module le champ magnétique par couplage inductif et est configuré pour fonctionner comme un lecteur à l'égard d'un autre circuit intégré passif qui fonctionne en mode carte.

Il est connu que le développement de la technologie NFC est étroitement lié au développement des applications de type émulation de carte, qui permettent d'utiliser un dispositif portatif HD en tant que carte à puce sans contact. Bien que des infrastructures équipées de lecteurs NFC existent déjà, notamment dans le domaine du contrôle d'accès, ces infrastructures sont peu nombreuses et ne se développent pas à une cadence suffisante pour permettre le développement souhaité de la technologie NFC. En particulier, une contrainte qui freine le développement des infrastructures NFC est le prix de revient des lecteurs NFC eux-mêmes, ainsi que le coût de leur installation sur les lieux de l'application. Un lecteur étant un dispositif actif qui émet un champ magnétique, il présente une certaine complexité et un coût non négligeable, et doit être raccordé à une source d'alimentation électrique.

Il peut donc être souhaité de prévoir un procédé pour conduire une transaction NFC et un dispositif NFC qui permette de mettre en oeuvre des applications carte sans la contrainte que nécessite l'installation d'un parc de lecteurs.

La présente invention inclut l'observation que, lors d'une transaction en mode émulation de carte, le contrôleur NFC n'utilise pas les ressources de l'interface sans contact CLF en ce qui concerne ses moyens d'émission d'un champ magnétique. Il pourrait donc être considéré qu'une transaction conduite entre un lecteur NFC dans le mode actif et un contrôleur NFC dans le mode passif représente un "gaspillage" de ressources, puisque chacun des deux éléments possède des moyens d'émission de champ magnétique, ceux du contrôleur NFC n'étant pas utilisés.

Sur le fondement de cette observation, des modes de réalisation de l'invention concernent un procédé pour conduire une transaction entre un dispositif NFC et un circuit intégré sans contact passif, tel que défini dans la revendication 1.

Des modes de réalisation de l'invention concernent également un circuit intégré sans contact de type passif agencé ou destiné à être solidaire d'un support fixe ou portatif, tel que défini dans la revendication 9.

Des modes de réalisation de l'invention concernent également un dispositif NFC, tel que défini dans la revendication 11. D'autres modes de réalisations sont définis dans les revendications dépendantes.

Des modes de réalisation du procédé selon l'invention et de dispositifs NFC mettant en oeuvre ce procédé seront exposés plus en détail dans la description suivante, faite à titre non limitatif en relation avec les figures jointes parmi lesquelles :
- la figure 1 précédemment décrite représente l'architecture d'un dispositif NFC classique,
- la figure 2 précédemment décrite représente des applications du dispositif NFC,
- la figure 3 montre des étapes d'une transaction classique entre le dispositif NFC de la figure 1 et un lecteur NFC externe,
- la figure 4 montre des étapes d'une transaction classique entre le dispositif NFC de la figure 1 en mode lecteur et un circuit intégré sans contact,
- la figure 5 représente l'architecture d'un mode de réalisation d'un dispositif NFC selon l'invention,
- la figure 6 représente des applications du dispositif NFC de la figure 5,
- la figure 7 illustre une transaction entre le dispositif NFC de la figure 5 et un lecteur passif selon l'invention,
- la figure 8 montre des étapes d'une transaction entre le dispositif NFC de la figure 5 et un lecteur passif selon l'invention,
- la figure 9 représente l'architecture d'un autre mode de réalisation d'un dispositif NFC selon l'invention,
- la figure 10 illustre une transaction entre le dispositif NFC de la figure 9 et un lecteur passif selon l'invention, et
- la figure 11 montre des étapes d'une transaction entre le dispositif NFC de la figure 9 et un lecteur passif selon l'invention.

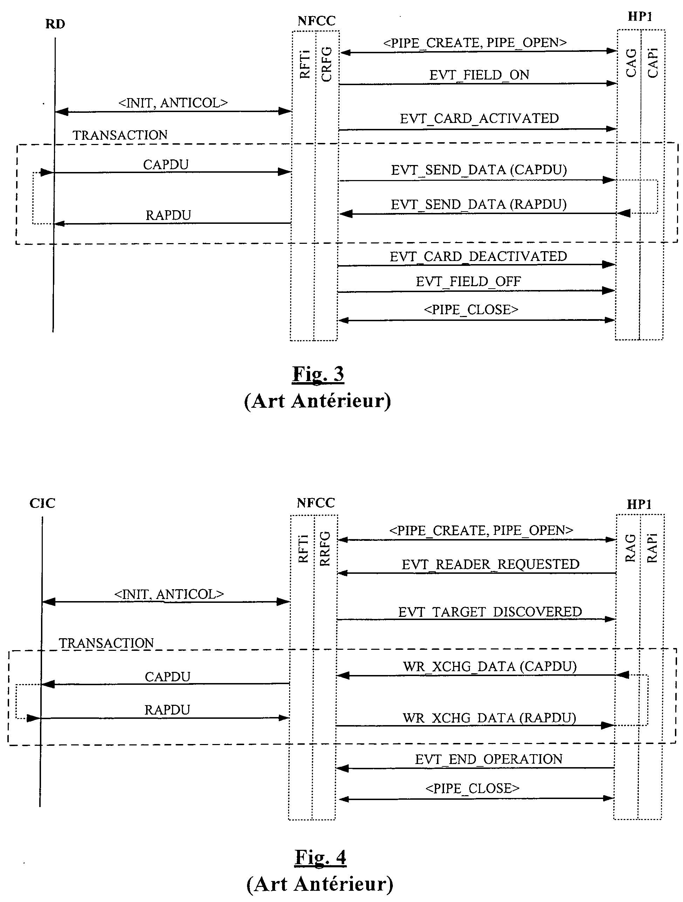

La figure 3 montre des étapes d'une transaction classique entre le dispositif NFC de la figure 1 et un lecteur RD. La figure 4 montre des étapes d'une transaction classique entre le dispositif NFC de la figure 1 et un circuit intégré sans contact CIC. Les étapes montrées sur les figures 3, 4 mettent en jeu des commandes normalisées décrites par les spécifications ETSI TS 102 622, NFCForum-TS-Type-4-Tag et NFCForum-TS-NDEF.

### Transaction en mode émulation de carte

La transaction représentée sur la figure 3 comprend les étapes d'initialisation suivantes :
- un canal P1 est créé puis ouvert entre une application carte CAPi exécutée par le processeur hôte HP1 et une technologie RFTi exécutée par le contrôleur NFCC, par l'intermédiaire d'une porte d'application carte CAG et d'une porte de carte RF CRFG (étape "PIPE_CREATE, PIPE_OPEN") ;
- le contrôleur NFCC détecte le champ magnétique émis par le lecteur RD et envoie une commande EVT_FIELD_ON au processeur HP1 ;
- le contrôleur NFCC conduit des étapes d'initialisation d'une communication avec le lecteur RD avec création d'un canal de communication RF, ainsi que des étapes d'anticollision si d'autres dispositifs NFC ou cartes sans contact se trouvent dans le champ d'interrogation du lecteur RD (étape "INIT, ANTICOL") ;
- lorsque la connexion avec le lecteur RD est établie, le contrôleur NFCC envoie une commande EVT_CARD_ACTIVATED au processeur hôte HP1 pour lui indiquer qu'une transaction peut commencer ;
La transaction proprement dite comprend ensuite les étapes suivantes
- l'envoi de commandes CAPDU par le lecteur RD au processeur NFCC, via le canal de communication RF ;
- la transmission de ces commandes au processeur hôte HP1 par le contrôleur NFCC, par l'intermédiaire du canal P1, et sous une forme encapsulée dans des commandes EVT_SEND_DATA (commande de type "événement" du jeu de commandes de l'interface HCI défini par les spécifications ETSI);
- l'envoi au contrôleur NFCC, par l'application carte CAPi du processeur hôte processeur HP1, de réponses RAPDU, via le canal P1 et sous une forme encapsulée dans des commandes EVT_SEND_DATA ; et
- la transmission des réponses RAPDU au lecteur RD par le contrôleur NFCC, via le canal RF.

Il sera noté qu'une première commande CAPDU émise par le lecteur RD peut être une commande de sélection de l'application carte CAPi que le processeur hôte HP1 exécute, par exemple la commande "Tag Application Select" définie au point 6.4.2 des spécifications "Type 4 Tag Operation":

| **CLA** | **INS** | **P1** | **P2** | **Lc** | **Data** | **Le** |
|---|---|---|---|---|---|---|
| 00h | A4h | 04h | 00h | 07h | D2760000850100h | - |

La transaction peut être interrompue si le processeur hôte HP1 ne répond pas en renvoyant la réponse SW1-SW2=9000h (notation hexadécimale).

Lorsque la transaction est terminée (ou interrompue), le lecteur RD cesse d'émettre le champ magnétique et le contrôleur NFCC envoie au processeur hôte HP1 une commande EVT_CARD_DEACTIVATED de désactivation de l'application carte et une commande EVT_FIELD_OFF indiquant que le champ magnétique n'est plus présent. Le canal P1 est ensuite fermé (étape "PIPE_CLOSE").

### Transaction en mode lecteur

La transaction représentée sur la figure 4 comprend les étapes d'initialisation suivantes :
- un canal P2 est créé puis ouvert entre une application lecteur RAPi du processeur hôte HP1 et une technologie RFTi du contrôleur NFCC, par l'intermédiaire d'une porte d'application lecteur RAG et d'une porte de lecteur RF RRFG (étapes "PIPE_CREATE, PIPE_OPEN");
- l'application lecteur RAPi envoie à intervalles réguliers au contrôleur NFCC des commandes d'interrogation EVT_READER_REQUESTED visant à détecter la présence du circuit intégré sans contact CIC (méthode d'interrogation dite "polling");
- lorsque le circuit intégré sans contact CIC est détecté, le contrôleur NFCC conduit des étapes "INIT, ANTICOL" d'initialisation d'une communication avec le circuit intégré sans contact CIC avec création d'un canal de communication RF, et optionnellement des étapes d'anticollision (si d'autres circuits intégrés sans contact sont présents dans le champ) ;
- le contrôleur NFCC envoie la commande EVT_TARGET_DISCOVERED au processeur hôte HP1 pour lui indiquer qu'une transaction peut commencer ;
La transaction proprement dite comprend ensuite les étapes suivantes
- l'envoi au contrôleur NFCC, par le processeur hôte HP1, de commandes CAPDU, via le canal P2, les commande CAPDU étant encapsulées dans des commandes WR_XCHG_DATA ;
- la transmission par le contrôleur NFCC des commandes CAPDU au circuit intégré sans contact CIC, par l'intermédiaire du canal RF,
- l'envoi au contrôleur NFCC, par le circuit intégré sans contact CIC, de réponses RAPDU,
- la transmission des réponses RAPDU au processeur hôte HP1, par le contrôleur NFCC, via le canal P2, les réponses RAPDU étant encapsulées dans des commandes WR_XCHG_DATA.

Comme précédemment, une première commande CAPDU émise par le processeur hôte HP1 peut être une commande de sélection de l'application que le circuit intégré CIC exécute, par exemple la commande décrite plus haut. La transaction peut être interrompue si le circuit intégré sans contact CIC ne répond pas en renvoyant la réponse SW1-SW2=9000h (notation hexadécimale), ce qui signifie qu'il ne comporte pas d'application correspondant à l'application lecteur que le processeur hôte HP1 exécute.

Lorsque la transaction est terminée (ou interrompue), le processeur hôte HP1 adresse au contrôleur NFCC une commande EVT_END_OPERATION de fermeture du canal RF, le canal P2 est ensuite fermé (étape "PIPE_CLOSE").

Les commandes CAPDU et les réponses RAPDU (habituellement désignées "C-APDU" et "R-APDU") sont définies par la norme ISO 7816-4. Leur format est précisé au point 5 des spécifications "Type 4 Tag Operation" (NFCForum-TS-Type-4-Tag). Les commandes CAPDU préconisées par ces spécifications sont les commandes Select, ReadBinary, UpdateBinary, par exemple "Tag Application Select", "Capability Container Select", "NDEF Select", "Capability Container Read", "NDEF Read", "NDEF Update".

Les transactions classiques du type décrit ci-dessus définissent ainsi un circuit intégré sans contact passif comme un élément configuré pour traiter des commandes CAPDU émises par un lecteur et fournir des réponses RAPDU à des commandes d'application lecteur.

### Exemples de transactions selon l'invention et architectures de dispositif NFC correspondantes

Un procédé de transaction NFC selon l'invention prévoit un circuit intégré sans contact passif de type lecteur RCIC, désigné dans ce qui suit, par commodité, "circuit intégré sans contact passif de type lecteur" ou "lecteur passif" car il forme l'équivalent d'un lecteur n'émettant pas de champ magnétique. Un tel lecteur passif est configuré pour fournir des commandes de type lecteur et traiter des réponses émises par un processeur hôte en mode émulation de carte. Il est généralement réalisé sous la forme d'un circuit intégré à microprocesseur ou microcontrôleur équipé d'une interface de communication sans contact, d'une mémoire programme (mémoire morte) et d'une mémoire de données (mémoire vive) et offrant une capacité de calcul suffisante pour émuler le fonctionnement d'un lecteur.

Un mode de réalisation du procédé selon l'invention prévoit également une architecture de dispositif NFC qui est conçue pour permettre à un processeur hôte du dispositif configuré dans le mode émulation de carte de conduire une transaction avec un tel lecteur passif.

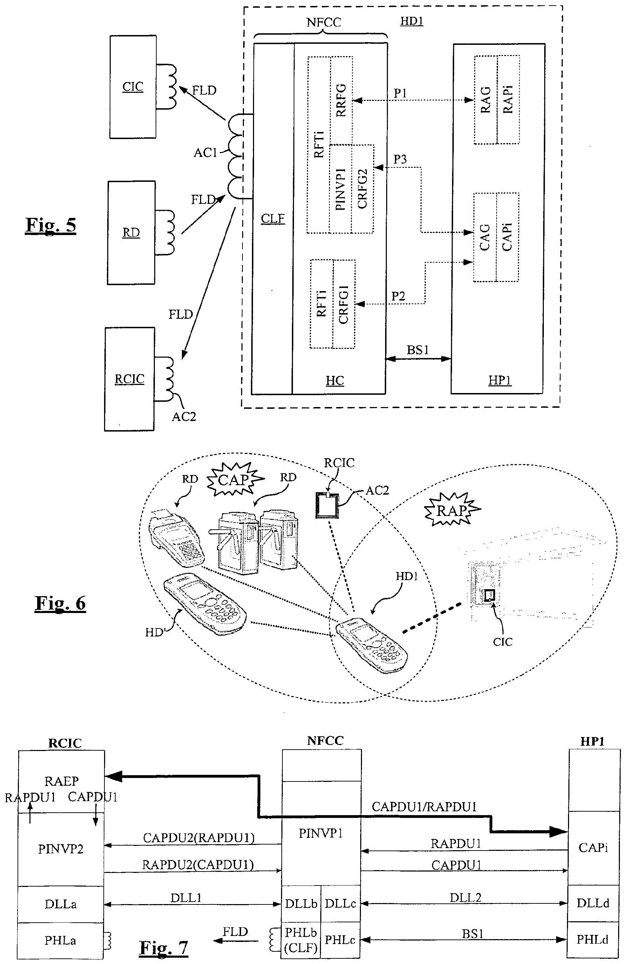

La figure 5 représente un mode de réalisation d'une telle architecture de dispositif NFC. Le dispositif NFC est susceptible d'être intégré dans un dispositif portatif HD ("Handheld Device") tel un téléphone portable, un PDA (Assistant Numérique Personnel), une carte active appelée "sticker" (carte destinée à être collée à l'arrière d'un téléphone mobile), une enveloppe de protection de téléphone mobile ("skins") etc. Le dispositif NFC comprend un contrôleur NFCC et au moins un processeur hôte HP1 relié au contrôleur NFCC par un bus de donnée BS1, par exemple de type SWP ("Single Wire Protocol"). Le contrôleur NFCC comporte une interface sans contact CLF équipée d'une bobine d'antenne AC1, et un contrôleur hôte HC. On suppose ici à titre non limitatif que le contrôleur NFCC présente toutes les fonctionnalités d'un contrôleur NFC classique, notamment qu'il implémente une ou plusieurs technologies RF RFTi, et qu'il est configuré pour activer une porte de lecteur RF RRFG ou une porte de carte RF CRFG1 pour permettre au processeur hôte HP1 d'exécuter des applications lecteur RAPi et des applications carte CAPi en utilisant ces technologies RF. On suppose également que le processeur hôte HP1 comprend au moins une application carte CAPi au moins une application lecteur RAPi, une porte d'application carte CAG pour l'application carte CAPi et une porte d'application lecteur RAG pour l'application lecteur RAPi. Ainsi, le dispositif NFC peut conduire une transaction avec un circuit intégré sans contact CIC classique en ouvrant un canal P1 entre l'application lecteur RAPi et une technologie RFTi, par l'intermédiaire des portes RAG et RRFG. Il peut également conduire une transaction avec un lecteur RD classique, en ouvrant un canal P2 entre l'application carte CAPi et une technologie RFTi, par l'intermédiaire des portes CAG et CRFG1.

Le dispositif NFCC comprend également une fonctionnalité PINVP1 appelée dans ce qui suit "programme d'inversion de protocole" ou "programme d'inversion". Le programme d'inversion PINVP1 est exécuté ici par le contrôleur hôte HC du contrôleur NFCC et est prévu pour établir une communication avec un lecteur passif RCIC selon l'invention, par l'intermédiaire d'une technologie RFTi et de l'interface CLF. Le programme d'inversion PINVP1 est également configuré pour activer une porte de carte RF CRFG2 et solliciter de l'administrateur HCI l'ouverture d'un canal P3 reliant la porte CRFG2 à une porte CAG d'une application carte CAPi du processeur hôte HP1, afin de transmettre au processeur hôte HP1 des commandes fournies par le lecteur passif RCIC comme s'il s'agissait de commandes reçues d'un véritable lecteur NFC ou dispositif équivalent, notamment un autre dispositif NFC fonctionnant en mode lecteur. Le programme d'inversion PINVP1 est également configuré pour recevoir du processeur hôte HP1 des réponses à de telles commandes, et les transmettre au lecteur passif RCIC.

Des exemples d'application du dispositif NFC selon l'invention sont illustrés sur la figure 6, qui représente un dispositif portatif HD équipé du dispositif NFC de la figure 5, le dispositif HD étant ici un téléphone mobile. On distingue les applications lecteur RAP et les applications carte CAP précédemment décrites en relation avec la figure 2. Parmi les applications carte CAP, on distingue une application supplémentaire selon la présente invention, à savoir une transaction entre le dispositif HD1 et un lecteur passif RCIC.

Sur la figure 6, le lecteur passif RCIC est représenté comme une puce nue connectée à une bobine d'antenne AC2. Cet ensemble puce et bobine d'antenne est susceptible en pratique d'être intégré dans ou monté sur tout type de support portatif. Il peut par exemple se présenter sous forme d'étiquette électronique ("tag"), de carte sans contact, ou être directement intégré dans un support fixe quelconque.

L'avantage d'un tel lecteur passif RCIC est qu'il permet d'émuler la présence d'un lecteur NFC tel que le lecteur RD représenté sur la figure 5, sans les inconvénients liés à l'installation d'un véritable lecteur. Grâce à l'invention, il devient ainsi possible d'installer à moindre coût un parc de "lecteurs virtuels" formés par des lecteurs passifs RCIC selon l'invention.

Dans un mode de réalisation de l'invention, il est souhaité que l'émulation d'un lecteur NFC au moyen du lecteur passif RCIC soit transparente pour le processeur hôte HP1, afin d'assurer la compatibilité de l'invention avec des processeurs hôtes classiques conçus pour dialoguer en mode émulation de carte avec de véritables lecteurs NFC, notamment des processeurs des cartes NFC-SIM récemment commercialisées et prévues pour être associées à un contrôleur NFC en tant que processeurs hôtes. Dans un tel mode de réalisation, le programme d'inversion PINVP1 est configuré de manière à "faire croire" au processeur hôte HP1, pendant une transaction avec le lecteur passif RCIC, qu'il est en présence d'un véritable lecteur.

La figure 7 représente une architecture fonctionnelle du dispositif NFC et du lecteur passif RCIC conçue à cet effet et montre une application carte CAPi du processeur HP1 en train de conduire une transaction avec le lecteur passif RCIC. Chaque élément RCIC, NFCC, HP1 comporte des moyens de communication représentés sous la forme d'une couche physique PHL et d'une couche de liaison de données DLL. Chaque couche physique comprend des moyens hardwares et des moyens d'exécution de protocoles de bas niveau pour l'émission et la réception de données (modulation et démodulation de signaux, codage et décodage des données, etc.). Une couche physique PHLa du lecteur passif RCIC coopère avec une première couche physique PHLb du contrôleur NFCC, à savoir l'interface CLF, pour créer un canal de communication RF et assurer la transmission et la réception de données dans le canal RF. Une seconde couche physique PHLc du contrôleur NFCC coopère avec une couche physique PHLd du processeur hôte HP1 pour assurer la transmission de données sur le bus BS1. Les couches physiques PHLc, PHLd comprennent par exemple des moyens hardwares de gestion d'un bus SWP et des moyens d'exécution d'un protocole de bas niveau pour l'émission et la réception de données via le bus SWP.

Au dessus des couches physiques, une couche de liaison de données DLLa du lecteur passif RCIC coopère avec une première couche de liaison de données DLLb du contrôleur NFCC, pour former une liaison de données DLL1 assurant le transport de données dans le canal RF créé par les couches physiques PHLa et PHLb. Le protocole de couche de liaison de données dépend de la technologie RFTi qui est activée par l'application lors d'une transaction, par exemple type A, type B, type B' ou type F, et est défini par les spécifications précédemment mentionnées. Une seconde couche de liaison de données DLLc du contrôleur NFCC coopère avec une couche de liaison de données DLLd du processeur hôte HP1 pour former une liaison de données DLL2 assurant le transport de données entre le contrôleur NFCC et le processeur hôte HP1. Les couches DLLc, DLLd comprennent par exemple des couches de liaison de données SWP et des couches liaison de données HCI. Telle que définie par les spécifications ETSI TS 102 622, paragraphe 4.1 figure 1, une couche de liaison de données HCI comprend par exemple une couche d'administration HCI, une couche de routage HCP ("HCP routing"), une couche de transport de messages ("HCP messaging") et une couche "porte" ("gate layer") qui comprend les portes d'application carte ou lecteur et les portes de carte RF et les portes de lecteur RF.

Enfin, au-dessus des couches liaison de données, le contrôleur NFCC comporte le programme d'inversion PINVP1, le processeur hôte HP1 comporte au moins une application carte CAPi, et le lecteur passif RCIC comporte un programme d'inversion de protocole PINVP2 coopérant avec un programme d'émulation d'application lecteur RAEP ("Reader Application Emulation Program").

Lors d'une transaction avec le lecteur passif RCIC, le programme d'inversion PINVP1 configure l'interface CLF en mode actif pour qu'elle émette un champ magnétique permettant d'établir un canal RF selon une technologie RFTi avec le lecteur passif RCIC. Le programme d'inversion PINVP1 dialogue ensuite avec le programme d'inversion PINVP2 du lecteur passif RCIC et lui adresse des commandes CAPDU2. Il reçoit des réponses RAPDU2 émises par le programme d'inversion PINVP2 dans lesquelles sont encapsulées les commandes CAPDU1 fournies par le programme RAEP, destinées au processeur hôte HP1. Le programme d'inversion PINVP1 désencapsule les commandes CAPDU1 et les communique à l'application carte CAPi du processeur hôte HP1 via un canal HCI, au moyen de commandes HCI. Le programme d'inversion PINVP1 reçoit ensuite des réponses RAPDU1 émises par l'application carte CAPi du processeur hôte HP1, via l'interface HCI. Il les encapsule dans des commandes CAPDU2 qu'il envoie au lecteur passif RCIC via le canal RF. Le programme d'inversion PINVP2 du lecteur passif RCIC reçoit ces commandes, en extrait les réponses RAPDU1, et les communique au programme RAEP pour traitement, lequel fournit ensuite une nouvelle commande CAPDU1 et ainsi de suite jusqu'à ce que la transaction soit achevée.

Une commande CAPDU comprend généralement des champs "CLA", "INS", "P1", "P2", "Lc", "DATA", "Le". Le champ "DATA" est un champ de données optionnel. L'encapsulation des réponses RAPDU1 dans des commandes CAPDU2 est faite par le programme d'inversion PINVP1 en insérant les réponses RAPDU1 dans ce champ de données "DATA". De même, une réponse RAPDU, comprend généralement des champs DATA, SW1, SW2, le champ "DATA" étant également un champ de données optionnel. L'encapsulation des commandes CAPDU1 dans des réponses RAPDU2 est faite par le programme d'inversion PINVP2 en insérant ces commandes CAPDU1 dans ce champ de données "DATA".

L'application carte CAPi du processeur hôte HP1 reçoit donc, vie l'interface HCI, des commandes CAPDU1 qui semblent émises par un lecteur NFC, et renvoie au lecteur "virtuel" des réponses CAPDU1. Sur la figure 7, une liaison en trait gras illustre une liaison virtuelle qui est établie entre l'application carte CAPi du processeur hôte HP1 et le programme d'émulation d'application lecteur RAEP du lecteur passif RCIC, par l'intermédiaire des programmes d'inversion PINVP1, PINVP2.

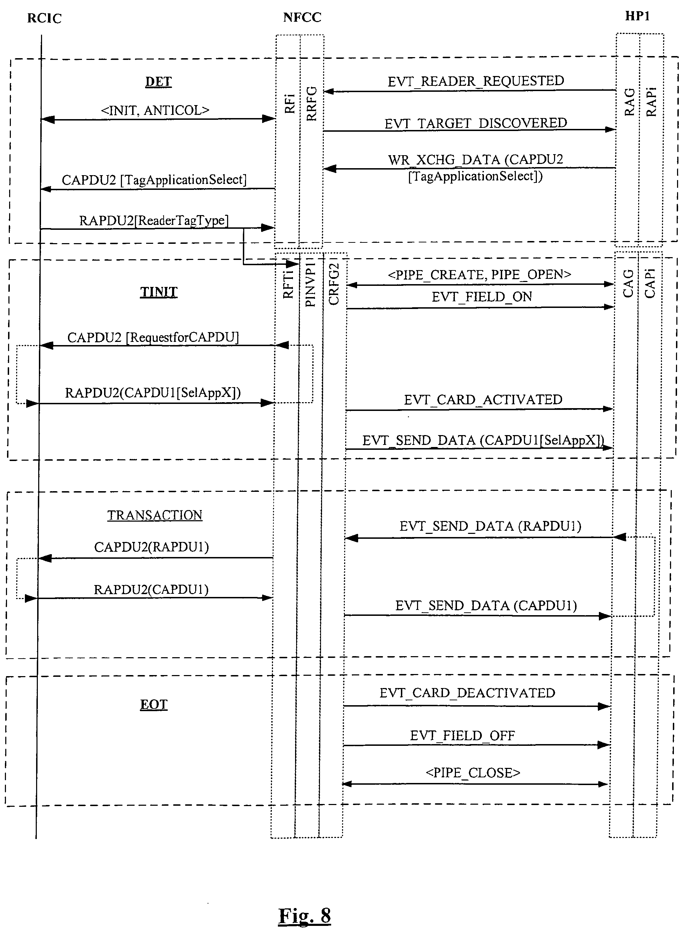

La figure 8 décrit plus en détail des étapes d'une transaction entre le processeur hôte HP1 et le lecteur passif RCIC. Cet exemple de mise en oeuvre de l'invention se base sur les spécifications ETSI TS 102 622 en ce qui concerne l'interface entre le processeur hôte HP1 et le contrôleur NFCC.

On distingue une phase de détection ("DET") du lecteur passif RCIC, une phase d'initialisation de la transaction ("TINIT"), une phase de transaction proprement dite ("TRANSACTION") et une phase de fin de transaction (EOT).

La phase de détection ("DET") vise à détecter la présence du lecteur passif RCIC. Celui-ci n'émettant pas de champ, il doit être détecté comme un circuit intégré sans contact classique, avant de constater qu'il comporte un programme d'émulation d'application lecteur RAEP.

Cette phase de détection préalable peut être mise en oeuvre selon différentes méthodes. Dans un mode de réalisation, le programme d'inversion PINVP1 est en permanence actif et demande régulièrement à l'interface CIL d'émettre le champ magnétique pour détecter la présence d'un circuit intégré sans contact, puis cherche à déterminer si ce circuit intégré sans contact est un lecteur passif ou non. Dans un autre mode de réalisation, la détection du lecteur passif RCIC est confiée à une application lecteur RAPi situé dans le processeur hôte HP1 ou tout autre processeur hôte susceptible d'être relié au contrôleur NFCC. Cette seconde méthode est celle qui sera décrite ci-après car elle est en conformité avec l'architecture de dispositif NFC telle que définie par les spécifications ETSI précitées, selon lesquelles le contrôleur NFCC émet le champ magnétique en réponse à des commandes fournies par des processeurs hôtes.

### Phase de détection (DET)

On suppose ici qu'une application lecteur RAPi, exécutée ici par le processeur hôte HP1, a été préalablement activée et est reliée au contrôleur NFCC par l'intermédiaire de portes RAG, RRFG et d'un canal P1 (Cf. Fig. 5). L'application RAPi sonde régulièrement les environs du dispositif NFC en adressant au contrôleur NFCC la commande EVT_READER_REQUESTED. Lorsque le lecteur passif RCIC est détecté, le contrôleur NFCC conduit des étapes d'initialisation d'un canal de communication RF, optionnellement d'anticollision, et d'activation du circuit intégré RCIC (étapes "INIT, ANTICOL"). Le contrôleur NFCC envoie ensuite à l'application RAPi la commande EVT_TARGET_DISCOVERED. L'application RAPi adresse ensuite au contrôleur NFCC la commande classique de sélection d'application "TagApplicationSelect". La commande est émise sous forme de commande CAPDU2 ("CAPDU2 [TagApplicationSelect]") et est adressée au contrôleur NFCC1 encapsulée dans la commande WR_XCHG_DATA. La commande CAPDU2 est transférée par le contrôleur NFCC au lecteur passif RCIC via le canal RF. Le lecteur passif RCIC renvoie une réponse particulière RAPDU2 contenant une information "ReaderTagType" signifiant qu'il forme un lecteur passif. Cette réponse particulière se distingue des réponses classiques telles que définies par la spécification NFCForum-TS-Type-4-Tag, table 3 section 5.2.2. Cette réponse peut être une réponse sans champ de données contenant un champ SW1-SW2 différent de celui habituellement renvoyé par un circuit intégré sans contact, par exemple le champ SW1-SW2=9001h (notation hexadécimale) au lieu du champ SW1-SW2=9000h. Dans un autre mode de réalisation, la réponse contient un champ SW1-SW2 standard de valeur 9000h mais contient un champ de données déterminé, signifiant que le circuit intégré est de type lecteur passif.

### Phase d'initialisation de la transaction ("TINIT")

La réponse particulière RAPDU2 provoque l'activation du programme d'inversion PINVP1 par le contrôleur NFCC. Le programme d'inversion PINVP1 active ensuite la porte de carte RF CRFG2 et génère un registre associé de type "registry" tel que décrit par ETSI TS 102 622 point 9.3.3.4. Ce registre volatile contient des paramètres du canal RF que l'application carte doit connaitre. La création et l'utilisation de ce registre ne seront pas décrites en détail ici et relèvent des compétences de l'homme de l'art. Il sera toutefois noté que le programme d'inversion PINVP1 peut placer dans ce registre des paramètres de canal RF qui ne correspondent pas à ceux du canal RF qui a été créé par le contrôleur NFCC pour accéder au lecteur passif RCIC. Ainsi, en sus de sa fonction d'émulation de lecteur NFC, le programme d'inversion PINVP1 peut permettre d'émuler une technologie RF vis-à-vis de l'application carte CAPi, notamment si l'application n'est pas compatible avec la technologie RF du lecteur passif RCIC. Par exemple, pendant la phase de détection, l'application lecteur RAPi peut avoir détecté le lecteur passif RCIC en utilisant le protocole de type A. Toutefois, l'application carte pourrait être configurée pour dialoguer avec des lecteurs de type B. Dans un mode de réalisation, le programme d'inversion de protocole PINVP1 extrait du registre ("registry") du contrôleur NFC l'information sur le type de protocole accepté par l'application carte CAPi. Ensuite, le programme d'inversion de protocole PINVP1 insère ou encapsule cette information dans une commande CAPDU2[RequestforCAPDU] décrite plus loin, qui est envoyée au lecteur passif RCIC. Le programme d'émulation d'application lecteur RAEP du lecteur passif RCIC utilise ensuite le protocole de type B pour communiquer avec l'application carte CAPi, tandis que les programmes d'inversion de protocole PINVP1 et PINVP2 continuent d'échanger des données en utilisant le protocole de type A. Ainsi, le protocole de transport de données utilisé entre le lecteur passif RCIC et l'interface sans contact CLF du contrôleur NFCC est "transparent" pour l'application carte CAPi et le programme d'émulation d'application lecteur RAEP.

Lorsque la porte de carte RF CRFG2 a été activée, le programme d'inversion PINVP1 sollicite auprès de l'administrateur HCI l'ouverture du canal P3 entre la porte CAG de l'application carte CAPi et la porte CRFG2 (étapes "PIPE_CREATE, PIPE_OPEN"). Le programme d'inversion envoie ensuite la commande EVT_FIELD_ON à l'application carte CAPi pour lui faire croire qu'un lecteur NFC émettant un champ magnétique a été détecté.

La phase d'initialisation comprend ensuite l'envoi par le programme d'inversion PINVP1 d'une commande CAPDU2 de type CAPDU2[RequestforCAPDU] formant une demande de fourniture d'une première commande d'application lecteur CAPDU1. Le lecteur passif RCIC répond par exemple au moyen d'une réponse du type RAPDU2(CAPDU1[SeIAppX]), dans laquelle est encapsulée une commande CAPDU1 qui désigne l'application "X" à sélectionner ("SeIAppX"). Sur réception de la réponse RAPDU2, le programme d'inversion PINVP1 désencapsule la commande CAPDU1, adresse à l'application carte CAPi la commande EVT_CARD_ACTIVATED qui signifie que l'application doit devenir active, puis lui adresse la commande CAPDU1[SeIAppX] encapsulée dans la commande "EVT_SEND_DATA".

### Phase de transaction ("TRANSACTION")

La phase de transaction proprement dite a été décrite plus haut en relation avec la figure 7. Elle comprend l'échange de commandes CAPDU1 et de réponses RAPDU1 entre l'application carte CAPi et le programme d'émulation d'application lecteur RAEP. Plus précisément, en réponse à la commande CAPDU1[SeIAppX] reçue au terme de la phase d'initialisation, l'application carte CAPi renvoie une première réponse RAPDU1, puis le programme RAEP renvoie une commande CAPDU1, et ainsi de suite jusqu'à la fin de la transaction. Les commandes CAPDU1 et les réponses RAPDU1 sont respectivement encapsulées dans des réponses RAPDU2 et des commandes CAPDU2 lorsqu'elles sont transmises dans le canal RF, et sont encapsulées dans des commandes HCP "EVT_SEND_DATA" lorsqu'elles sont transmises dans le canal P3 de l'interface HCI. Le programme d'inversion PINVP1 se charge de l'encapsulation des réponses RAPDU1 dans des commandes CAPDU2 et de la désencapsulation des commandes CAPDU1 présentes dans les réponses RAPDU2. La porte de carte RF CRFG2 se charge de l'encapsulation des commandes CAPDU1 et des réponses RAPDU1 dans des commandes "EVT_SEND_DATA".

### Phase de fin de transaction (EOT)

La transaction se termine par l'envoi d'une commande particulière CAPDU2 par le lecteur passif RCIC ou par l'absence d'envoi d'une nouvelle commande par celui-ci. Le programme d'inversion PINVP1 assure alors la fermeture du canal RF en demandant au processeur hôte HP1 de cesser d'émettre le champ et il adresse à l'application lecteur CAPi les commandes "EVT_CARD_DEACTIVATED" puis "EVT_FIELD_OFF". Le canal P3 est ensuite fermé (étape <PIPE_CLOSE>).

On a décrit dans ce qui précède un mode de réalisation de l'invention dans lequel le programme d'inversion PINVP1 est exécuté par le contrôleur hôte HC du contrôleur NFCC. Dans d'autres modes de réalisation, le programme d'inversion peut être exécuté par un autre organe du dispositif NFC, par exemple un second processeur hôte HP2, qui agit alors en tant qu'intermédiaire entre le contrôleur NFCC et le processeur hôte HP1. Une tel mode de réalisation sera maintenant décrit.

### Programme d'inversion exécuté par un processeur hôte

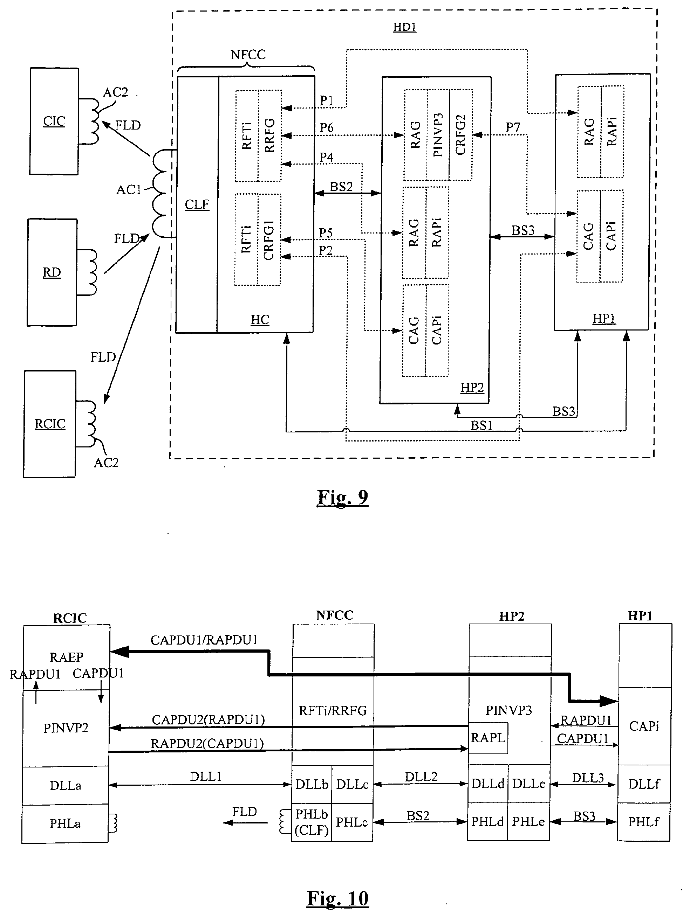

La figure 9 représente un autre mode de réalisation d'un dispositif NFC selon l'invention, intégré dans un dispositif portatif HD. Le dispositif NFC comprend le contrôleur NFCC, le processeur hôte HP1 et un second processeur hôte HP2. Le processeur hôte HP2 est relié au contrôleur NFCC par un bus BS2, par exemple un bus asynchrone reliant des interfaces UART ("Universal Asynchronous Receiver Transmitter") du contrôleur NFCC et du processeur hôte HP2. Le processeur hôte HP1 est relié au contrôleur NFCC par le bus BS1 décrit plus haut et au processeur hôte HP2 par un bus BS3, par exemple un bus ISO 7816. Le processeur HP2 est par exemple un processeur bande de base de téléphone mobile et le processeur HP1 un processeur sécurisé tel qu'un processeur de carte SIM.

Le contrôleur NFCC comprend comme précédemment une interface sans contact CLF équipée d'une bobine d'antenne AC1 et un contrôleur hôte HC. On suppose comme précédemment, à titre non limitatif, que le processeur hôte HP1 présente toutes les fonctionnalités d'un contrôleur NFC classique, notamment qu'il peut mettre en oeuvre une ou plusieurs technologies RF RFTi et qu'il est configuré pour activer une porte de lecteur RF RRFG ou une porte de carte RF CRFG1 pour permettre aux processeurs hôtes HP1, HP2 d'exécuter des applications lecteur RAPi et des applications carte CAPi. On suppose également que les processeurs hôtes HP1, HP2 comprennent chacun au moins une application carte CAPi et une application lecteur RAPi. Ainsi, le dispositif NFC peut conduire une transaction avec un circuit intégré sans contact CIC classique en ouvrant un canal P1 entre une application lecteur RAPi exécutée par le processeur hôte HP1 et une technologie RFTi, ou un canal P4 entre une application lecteur RAPi exécutée par le processeur hôte HP2 et une technologie RFTi, par l'intermédiaire de portes RAG et RRFG. Il peut également conduire une transaction avec un lecteur RD classique en ouvrant un canal P2 entre une application carte CAPi exécutée par le processeur hôte HP1 et une technologie RFTi, ou un canal P5 entre une application carte CAPi exécutée par le processeur hôte HP2 et une technologie RFTi, par l'intermédiaire de portes CAG et CRFG1.

Par ailleurs, le processeur hôte HP2 comprend également un programme d'inversion de protocole PINVP3 selon l'invention. Ce programme d'inversion PINVP3 est configuré pour établir une communication avec un lecteur passif RCIC selon l'invention, par l'intermédiaire d'une technologie RFTi et de l'interface CLF, et recevoir du lecteur passif RCIC des commandes CAPDU1 et les communiquer au processeur hôte HP1 comme s'il s'agissait de commandes reçues d'un véritable lecteur NFC. Il est également configuré pour recevoir du processeur hôte HP1 des réponses RAPDU1 à de telles commandes, et les fournir au lecteur passif RCIC pour traitement. A cet effet, le programme d'inversion PINVP3 est configuré pour activer une porte d'application lecteur RAG et solliciter de l'administrateur HCI l'ouverture d'un canal P6 reliant la porte RAG à une porte de lecteur RF RRFG associée à une technologie RFTi. Le programme d'inversion PINVP3 est également configuré pour activer une porte de carte RF CRFG2 et solliciter de l'administrateur HCI l'ouverture d'un canal P7 reliant la porte de carte RF CRFG2 à une porte CAG d'une application carte CAPi exécutée par le processeur hôte HP1.

La figure 10 est une vue d'ensemble d'une architecture fonctionnelle du dispositif NFC et du lecteur passif RCIC permettant à l'application carte CAPi du processeur HP1 de conduire une transaction avec le lecteur passif RCIC, par l'intermédiaire du processeur HP2 et du contrôleur NFCC. Chaque élément RCIC, NFCC, HP1, HP2 comporte une couche physique PHL et une couche de liaison de données DLL. Une couche physique PHLa du lecteur passif RCIC coopère avec une première couche physique PHLb du contrôleur NFCC, à savoir l'interface CLF, pour créer un canal de communication RF et assurer la transmission et la réception de données dans le canal RF. Une seconde couche physique PHLc du contrôleur NFCC coopère avec une première couche physique PHLd du processeur hôte HP2 pour assurer la transmission de données sur le bus BS2. Les couche physique PHLc, PHLd sont par exemple des interfaces UART. Une seconde couche physique PHLe du processeur hôte HP2 coopère avec une couche physique PHLf du processeur hôte HP1 pour assurer la transmission de données sur le bus BS2. Les couches physiques PHLe, PHLf sont par exemple des interfaces de bus ISO 7816.

De même, une couche de liaison de données DLLa du lecteur passif RCIC coopère avec une première couche de liaison de données DLLb du contrôleur NFCC pour former une liaison de données DLL1 assurant le transport de données dans le canal RF créé par les couches physiques PHLa et PHLb, selon une technologie RFTi (par exemple de type A, B, B' ou F). Une seconde couche de liaison de données DLLc du contrôleur NFCC coopère avec une première couche de liaison de données DLLd du processeur hôte HP2 pour former une liaison de données DLL2 assurant le transport de données entre le contrôleur NFCC et le processeur hôte HP2. Les couches de liaison de données DLLc, DLLd comprennent par exemple une couche de liaison de données asynchrone et une couche de liaison de données HCI. Enfin, une seconde couche de liaison de données DLLe du processeur hôte HP2 coopère avec une couche de liaison de données DLLf du processeur hôte HP1 pour former une liaison de données DLL3 assurant le transport de données entre le processeur hôte HP2 et le processeur hôte HP1. Les couches de liaison de données DLLe, DLLf comprennent par exemple une couche de liaison de données ISO 7816 et une couche de liaison de données HCI.

Enfin, au-dessus des couches liaison de données, le contrôleur NFCC comporte une technologie RFTi et une porte de lecteur RF RRFG, le processeur hôte HP2 comporte le programme d'inversion PINVP3 et le processeur hôte HP1 comporte une application carte CAPi. Le lecteur passif RCIC comporte comme précédemment le programme d'inversion PINVP2 coopérant avec le programme d'émulation d'application lecteur RAEP.

Le programme d'inversion PINVP3 comprend une fonction RAPL (sous-programme) formant l'équivalent d'une application lecteur, pour détecter puis établir une communication avec le lecteur passif RCIC en tant que circuit intégré sans contact, par l'intermédiaire du contrôleur NFCC. Ainsi, au moyen de la fonction RAPL, le programme d'inversion PINVP3 configure l'interface CLF en mode actif pour qu'elle émette un champ magnétique et établisse un canal RF selon une technologie RFTi avec le lecteur passif RCIC. Le programme d'inversion PINVP3 dialogue ensuite avec le programme d'inversion PINVP2 du lecteur passif RCIC et lui adresse des commandes CAPDU2. Il reçoit des réponses RAPDU2 émises par le programme d'inversion PINVP2 dans lesquelles sont encapsulées les commandes CAPDU2 fournies par le programme RAEP. Il désencapsule les commandes CAPDU1 et les communique à l'application carte CAPi du processeur hôte HP1 via le canal P7 de l'interface HCI. Le programme d'inversion PINVP3 reçoit ensuite des réponses RAPDU1 émises par l'application carte CAPi du processeur hôte HP1, via le canal P7 de l'interface HCI. Il les encapsule dans des commandes CAPDU2 qu'il envoie au lecteur passif RCIC via le canal P6 de l'interface HCI et le canal RF. Le programme d'inversion PINVP2 reçoit ces commandes, en extrait les réponses RAPDU1, et les communique au programme RAEP pour traitement, lequel fournit ensuite une nouvelle commande CAPDU1 et ainsi de suite jusqu'à ce que la transaction soit achevée.

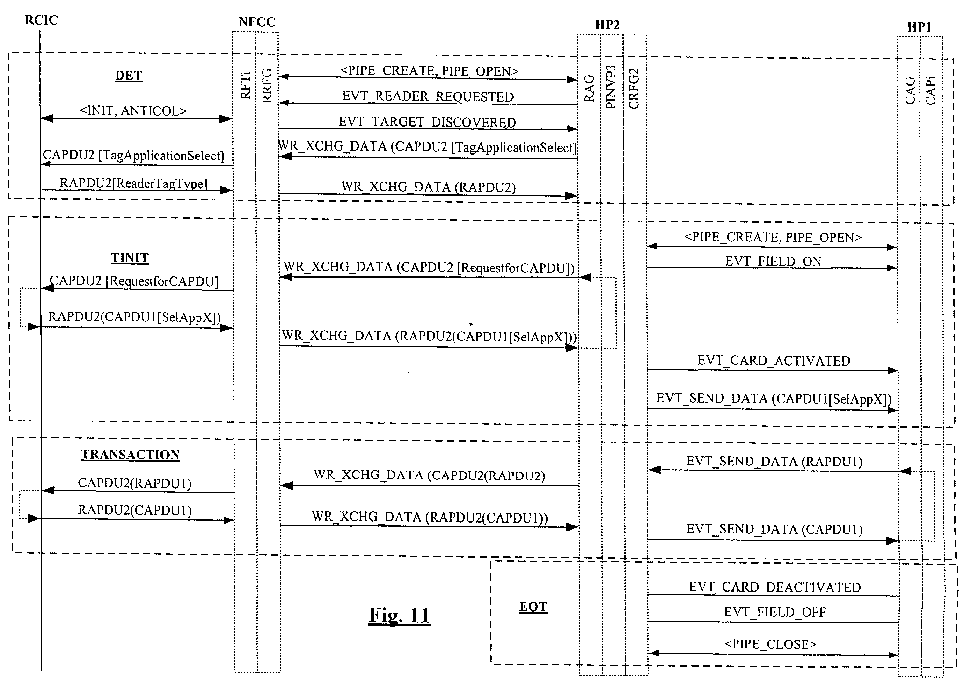

La figure 11 décrit plus en détail des étapes d'une transaction entre le processeur hôte HP1 et le lecteur passif RCIC. On distingue une phase de détection ("DET") du lecteur passif RCIC, une phase d'initialisation de la transaction ("INIT"), une phase de transaction proprement dite ("TRANSACTION") et une phase de fin de transaction (EOT).

On suppose dans cet exemple de réalisation que le programme d'inversion PINVP3 est configuré pour détecter lui-même la présence du lecteur passif RCIC, au moyen de la fonction RAPL, en adressant cycliquement des commandes HCI "EVT_READER_REQUESTED" au contrôleur NFCC. Toutefois, la phase de détection du lecteur passif RCIC pourrait aussi être conduite par une application lecteur du processeur hôte HP2, voire une application lecteur du processeur hôte HP1. Dans ce cas, la détection du lecteur passif RCIC provoquerait l'activation du programme d'inversion PINVP3.

### Phase de détection (DET)

La phase de détection comprend donc ici l'activation préalable du programme d'inversion PINVP3 et la création du canal P6 entre le programme PINVP3 et le contrôleur NFCC, au moyen d'une porte d'application lecteur RAG (Cf. Fig. 9), au cours d'étapes "PIPE_CREATE, PIPE_OPEN". Ensuite, le programme d'inversion PINVP3 sonde régulièrement les environs du dispositif NFC en adressant au contrôleur NFCC la commande EVT_READER_REQUESTED. Lorsque le lecteur passif RCIC est détecté, le contrôleur NFCC conduit des étapes d'initialisation d'un canal de communication RF, et optionnellement d'anticollision, et d'activation du circuit intégré (étapes "INIT, ANTICOL"). Le contrôleur NFCC envoie ensuite à l'application lecteur RAPi la commande EVT_TARGET_DISCOVERED. Le programme d'inversion PINVP3 adresse ensuite au contrôleur NFCC une commande de sélection d'application "TagApplicationSelect". La commande est du type "CAPDU2 [TagApplicationSelect]") et est encapsulée dans la commande WR_XCHG_DATA dans le canal P6. La commande CAPDU2 est transférée par le contrôleur NFCC au lecteur passif RCIC via le canal RF. Le lecteur passif RCIC renvoie une réponse RAPDU2 particulière contenant une information "ReaderTagType" signifiant qu'il forme un lecteur passif. Comme indiqué plus haut, cette réponse RAPDU2 particulière se distingue d'une réponse classique de circuit intégré sans contact. Il peut s'agir d'une réponse contenant un champ SW1-SW2 différent de celui habituellement renvoyé par un circuit intégré sans contact, par exemple SW1-SW2=9001h (notation hexadécimale), ou d'une réponse contenant un champ SW1-SW2 standard de valeur 9000h et un champ de données déterminé signifiant que le circuit intégré est de type lecteur passif. Cette réponse particulière est communiquée au programme d'inversion PINVP3 au moyen de la commande WR_XCHG_DATA, via le canal P6.

### Phase d'initialisation de la transaction ("TINIT")

La réponse RAPDU particulière conduit le programme d'inversion PINVP3 à activer la porte de carte RF CRFG2 ainsi qu'un registre associé de type "registry" contenant des paramètres du canal RF. Comme précédemment le programme d'inversion PINVP3 peut placer dans ce registre des paramètres de canal RF qui ne correspondent pas à ceux du canal RF qui a été créé par le contrôleur NFCC pour accéder au lecteur passif RCIC.

Le programme d'inversion PINVP3 sollicite ensuite auprès de l'administrateur HCI l'ouverture du canal P7 reliant la porte CRFG2 à la porte CAG de l'application carte CAPi du processeur hôte HP1 (étapes "PIPE_CREATE, PIPE_OPEN"). Le programme d'inversion PINVP3 envoie ensuite la commande EVT_FIELD_ON à l'application carte CAPi pour lui faire croire qu'un lecteur NFC émettant un champ magnétique a été détecté.

La phase d'initialisation comprend également l'envoi au lecteur passif RCIC d'une commande CAPDU2 de type CAPDU2[RequestforCAPDU] formant une demande de fourniture d'une commande d'application lecteur CAPDU1. Le programme d'inversion PINVP3 envoie cette commande au contrôleur NFCC via le canal P6 au moyen d'une commande WR_XCHG_DATA et le processeur hôte HP1 la répercute au lecteur passif RCIC. Le lecteur passif RCIC répond au moyen d'une réponse de type RAPDU2(CAPDU1[SeIAppX]) dans laquelle est encapsulée une commande CAPDU1. La commande CAPDU1 est par exemple une commande de sélection d'une application "X" à sélectionner ("SeIAppX"). La réponse RAPDU2 contenant la commande CAPDU1 est transmise au programme d'inversion PINVP3 via le canal P6 sous forme encapsulée dans une commande WR_XCHG_DATA. Sur réception de la réponse RAPDU2, le programme d'inversion PINVP3 désencapsule la commande CAPDU1, adresse à l'application carte CAPi, via le canal P7, la commande EVT_CARD_ACTIVATED, puis lui adresse la commande CAPDU1[SeIAppX] encapsulée dans la commande "EVT_SEND_DATA".

### Phase de transaction ("TRANSACTION")

La phase de transaction décrite plus haut en relation avec la figure 10 comprend l'échange de commandes CAPDU1 et de réponses RAPDU1 entre l'application carte CAPi et le programme d'émulation d'application lecteur RAEP. Plus précisément, en réponse à la commande CAPDU1[SeIAppX] reçue au terme de la phase d'initialisation, l'application carte CAPi renvoie une première réponse RAPDU1, puis le programme d'émulation d'application lecteur RAEP du lecteur passif RCIC renvoie une commande CAPDU1, et ainsi de suite jusqu'à la fin de la transaction.

Les commandes CAPDU1 et les réponses RAPDU1 sont respectivement encapsulées dans des réponses RAPDU2 et des commandes CAPDU2 lorsqu'elles sont transmises dans le canal RF. Les réponses RAPDU2 et les commandes CAPDU2 sont elles-mêmes encapsulées dans des commandes WR_XCHG_DATA lorsqu'elles circulent dans le canal P6 entre le contrôleur NFCC1 et le programme d'inversion PINVP3. Les réponses RAPDU1 et les commandes CAPDU1 sont encapsulées dans des commandes EVT_SEND_DATA lorsqu'elles circulent dans le canal P7 entre le programme d'inversion PINVP3 et l'application carte CAPi. La porte d'application lecteur RAG du programme d'inversion PINVP3 se charge de l'encapsulation des commandes CAPDU2 dans des commandes "WR_XCHG_DATA" et de la désencapsulation des réponses RAPDU1 présentes dans les commandes WR_XCHG_DATA. Le programme d'inversion PINVP1 se charge de l'encapsulation des réponses RAPDU1 dans des commandes CAPDU2 et de la désencapsulation des commandes CAPDU1 présentes dans les réponses RAPDU2. La porte de carte RF CRFG2 se charge de l'encapsulation des commandes CAPDU1 et des réponses RAPDU1 dans des commandes "EVT_SEND_DATA" (Cf. Fig. 9).

### Phase de fin de transaction (EOT)

La transaction de termine par l'envoi d'une commande particulière CAPDU2 par le lecteur passif RCIC ou par l'absence d'envoi d'une nouvelle commande par celui-ci. Le programme d'inversion PINVP3 assure alors la fermeture du canal RF en demandant au processeur hôte HP1 de cesser d'émettre le champ, et adresse à l'application lecteur CAPi les commandes HCP "EVT_CARD_DEACTIVATED" puis "EVT_FIELD_OFF". Le canal P7 entre les porte CRFG2 et CAG est ensuite fermé (étape <PIPE_CLOSE>).

### Variantes de réalisation et applications

Il apparaîtra clairement à l'homme de l'art que la présente invention est susceptible de diverses applications. De façon générale, un lecteur passif RCIC selon l'invention est susceptible d'être intégré dans tout type de dispositif portatif ou fixe. Les termes "carte", "carte à puce sans contact" ou "étiquette" ("tag") ont la même signification et désignent un support équipé d'un lecteur passif RCIC selon l'invention. Un lecteur passif selon l'invention étant destiné à être utilisé en tant que lecteur et non en tant que circuit intégré de carte à puce sans contact, il n'est pas nécessairement intégré dans un support portatif et peut être agencé dans ou sur un support fixe, par exemple des portiques de paiement ou de contrôle d'accès. Également, bien qu'un tel lecteur passif ait été présenté comme un circuit intégré sans contact, le terme "sans contact" désigne l'interface de communication que le lecteur passif utilise pour échanger des données avec le dispositif NFC et ne signifie aucunement que le circuit intégré ne peut pas être équipé de contacts. Le lecteur passif RCIC pourrait en effet être réalisé au moyen d'un circuit intégré dit "combi" comprenant à la fois une interface de communication à contact (par exemple des contacts ISO 7816) et une interface de communication sans contact.

Par ailleurs le terme "passif" ne doit pas être interprété comme signifiant qu'un circuit intégré sans contact formant un lecteur passif selon l'invention ne comporte aucun moyen pour émettre un champ magnétique et/ou qu'il n'émet aucun champ magnétique pendant une transaction. En effet, selon le principe de fonctionnement du mode émulation de carte tel que décrit par le brevet EP 1 327 222 (US 7 098 770), une modulation de charge passive peut également être émulée par des émissions de courte durée de champ magnétique, qui sont perçues par l'organe émettant le champ principal comme des signaux de modulation de charge. Le terme "passif" signifie donc simplement qu'un lecteur passif RCIC selon l'invention n'émet pas le champ magnétique principal permettant de conduire la transaction, à l'inverse d'un lecteur conventionnel.

On a décrit dans ce qui précède des modes de réalisation de l'invention compatibles avec les spécifications du NFC Forum en ce qui concerne l'interface de communication entre le dispositif NFC et le lecteur passif RCIC, cette compatibilité étant notamment assurée grâce à l'encapsulation de commandes et réponses CAPDU1 et RAPDU1 dans des réponses et commandes RAPDU2 et CAPDU2 circulant dans le canal RF. De même, on a décrit des modes de réalisation de l'invention compatibles avec les spécifications ETSI en ce qui concerne l'interface de communication entre le contrôleur NFCC et le processeur hôte HP1 (premier mode de réalisation, ou en ce qui concerne l'interface de communication entre le contrôleur NFCC1 et les processeurs hôtes HP1, HP2 et entre les processeurs hôtes HP1, HP2 (second mode de réalisation), grâce à l'utilisation de canaux HCI ("pipes") et de commandes HCP. L'invention peut toutefois être mise en oeuvre d'une manière différente dans des applications où il n'est pas nécessaire ou souhaité d'assurer la compatibilité avec de telles spécifications. Ainsi, dans des modes de réalisation de l'invention, le lecteur passif RCIC peut fournir des commandes CAPDU1 qui ne sont pas encapsulées dans des réponses RAPDU2 à des commandes CAPDU2 envoyées par le dispositif NFC et le contrôleur NFCC1 peut envoyer au lecteur passif RCIC des réponses RAPDU1 qui ne sont pas encapsulées dans des commandes CAPDU2. De même le programme d'inversion PINVP1 ou PINVP3 peut transférer au processeur hôte HP1 des commandes fournies par le lecteur passif RCIC sans les encapsuler dans des commandes HCI. Également, les commandes et les réponses peuvent ne pas être au format APDU et peuvent présenter tout format pouvant être conçu par l'homme de l'art. Dans de tels modes de réalisation, un protocole est prévu pour distinguer d'une part des commandes et des réponses (CAPDU2, RAPDU2) qui permettent de gérer une communication entre le programme d'inversion PINVP1 ou PINVP3 du dispositif NFC et le programme d'inversion PINVP2 du lecteur passif RCIC, et d'autre part des commandes et des réponses (CAPDU1, RAPDU1) relatives à la transaction entre le programme d'émulation RAEP du lecteur passif et l'application carte du processeur hôte HP1. Ce protocole permet au programme d'inversion PINVP1 ou PINVP3 du dispositif NFC et au programme d'inversion PINVP2 du lecteur passif RCIC de distinguer les commandes ou les réponses qui les concernent et les commandes ou les réponses qu'ils doivent transférer aux programmes de niveau supérieur, respectivement l'application carte CAPi et le programme d'émulation RAEP.

## Revendications

1. Procédé pour conduire une transaction entre un dispositif NFC et un circuit intégré sans contact passif (RCIC), le dispositif NFC comprenant :
- un contrôleur NFC (NFCC) couplé à une interface de communication sans contact (CLF), et
- au moins un premier processeur hôte (HP1) comprenant au moins un programme d'application carte (CAPi),
procédé **caractérisé en ce qu'**il comprend des étapes consistant à :
- prévoir dans le circuit intégré sans contact (RCIC) au moins un programme d'émulation d'application lecteur (RAEP) configuré pour fournir des premières commandes d'application lecteur (CAPDU1) et traiter des premières réponses d'application carte (RAPDU1), et
- au moyen d'un organe intermédiaire (HC, HP2) du dispositif NFC :
- placer l'interface de communication sans contact (CLF) dans un mode actif où elle émet un champ magnétique et établir une communication avec le circuit intégré sans contact (RCIC),
- recevoir du circuit intégré sans contact (RCIC) des premières commandes d'application lecteur (CAPDU1) et les transférer au premier processeur hôte (HP1), et
- recevoir du premier processeur hôte (HP1) des premières réponses d'application carte (RAPDU1) et les transférer au circuit intégré sans contact (RCIC).

2. Procédé selon la revendication 1, comprenant des étapes consistant à :
- prévoir dans l'organe intermédiaire (HC, HP2) un premier programme d'inversion de protocole (PINVP1, PINVP3),
- prévoir dans le circuit intégré sans contact (RCIC) un second programme d'inversion de protocole (PINVP2) configuré pour coopérer avec le programme d'émulation d'application lecteur (RAEP),
- établir entre le premier et le second programmes d'inversion une communication sans contact dans laquelle l'organe intermédiaire (HC, HP2) agit en tant que lecteur relativement au circuit intégré sans contact (RCIC), et,
- par l'intermédiaire du second et du premier programmes d'inversion :
- transférer au premier processeur hôte (HP1) des premières commandes d'application lecteur (CAPDU1) fournies par le programme d'émulation d'application lecteur (RAEP), et
- transférer au programme d'émulation d'application lecteur (RAEP) des premières réponses d'application carte (RAPDU1) fournies par l'application carte (CAPi) du premier processeur hôte.

3. Procédé selon l'une des revendications 1 et 2, comprenant les étapes suivantes, conduites par l'organe intermédiaire :
- recevoir du premier processeur hôte (HP1) des premières réponses d'application carte (RAPDU1), les encapsuler dans des secondes commandes d'application lecteur (CAPDU2) et transférer les secondes commandes d'application lecteur (CAPDU2) au circuit intégré sans contact (RCIC),
- recevoir du circuit intégré sans contact (RCIC) des premières commandes d'application lecteur (CAPDU1) encapsulées dans des secondes réponses d'application carte (RAPDU2), désencapsuler les premières commandes d'application lecteur (CAPDU1) et les transférer au premier processeur hôte (HP1).

4. Procédé selon l'une des revendications 1 à 3, dans lequel les premières commandes d'application lecteur (CAPDU1) émises par le programme d'émulation d'application lecteur et les premières réponses d'application carte émises par le programme d'application carte (CAPi) sont au format APDU ISO 7816.

5. Procédé selon l'une des revendications 1 à 4, comprenant une étape consistant à fournir au premier processeur hôte (HP1), au moyen de l'organe intermédiaire (NFCC, HP2), des commandes d'interface HCI choisies de manière à faire croire au premier processeur hôte que les premières commandes d'application lecteur (CAPDU1) reçues du circuit intégré sans contact (RCIC) sont émises par un lecteur NFC dans le mode actif.

6. Procédé selon l'une des revendications 1 à 5, comprenant une étape consistant à mettre à la disposition du premier processeur hôte (HP1), dans un registre, des paramètres de canal RF choisis de manière à faire croire au premier processeur hôte que les premières commandes d'application lecteur (CAPDU1) reçues du circuit intégré sans contact (RCIC) sont émises par un lecteur NFC dans le mode actif.

7. Procédé selon l'une des revendications 1 à 6, dans lequel l'organe intermédiaire est un contrôleur hôte (HC) du dispositif NFC.

8. Procédé selon l'une des revendications 1 à 7, dans lequel l'organe intermédiaire est un second processeur hôte (HP2) du dispositif NFC.

9. Circuit intégré sans contact (RCIC) de type passif agencé ou destiné à être solidaire d'un support fixe ou portatif, comprenant :
- un programme (RAEP) d'émulation de lecteur NFC et configuré pour fournir des premières commandes d'application lecteur (CAPDU1) et de traiter des premières réponses d'application carte (RAPDU1) reçues en réponse à des commandes d'application lecteur, **caractérisé en ce qu'**il comprend en outre :
- un programme d'inversion de protocole (PINVP2) configuré pour :
- répondre à des secondes commandes d'application lecteur (CAPDU2) en fournissant des secondes réponses d'application carte (RAPDU2),
- encapsuler dans les secondes réponses d'application carte (RAPDU2) les premières commandes d'application lecteur (CAPDU1) fournies par le programme (RAEP) d'émulation de lecteur NFC, et
- recevoir les premières réponses d'application carte (RAPDU1) encapsulées dans les secondes commandes d'application lecteur (CAPDU2)..

10. Circuit intégré sans contact (RCIC) selon la revendication 9, configuré pour :
- recevoir des premières réponses d'application carte (RAPDU1) et des secondes commandes d'application lecteur (CAPDU2) au format APDU ISO 7816, et
- émettre des premières commandes d'application lecteur (CAPDU1) et des secondes réponses d'application carte (RAPDU2) au format APDU ISO 7816.

11. Dispositif NFC comprenant :
- un contrôleur NFC (NFCC) couplé à une interface de communication sans contact (CLF), et
- un premier processeur hôte (HP1) comprenant au moins un programme d'application carte (CAPi) et configuré pour traiter des premières commandes d'application lecteur (CAPDU1) et fournir des premières réponses d'application carte (RAPDU1),
**caractérisé en ce qu'**il comprend un organe intermédiaire (HC, HP2) pour coordonner une transaction entre le processeur hôte (HP1) et un circuit intégré sans contact passif (RCIC) de type lecteur, l'organe intermédiaire étant configuré pour :
- placer l'interface de communication sans contact (CLF) dans un mode actif où elle émet un champ magnétique,
- recevoir, par l'intermédiaire de l'interface de communication sans contact en mode actif, des premières commandes d'application lecteur (CAPDU1) émises par un circuit intégré sans contact passif de type lecteur et les transférer au premier processeur hôte (HP1), et
- recevoir des premières réponses d'application carte (RAPDU1) fournies par le premier processeur hôte (HP1) et les transférer, par l'intermédiaire de l'interface de communication sans contact en mode actif, au circuit intégré sans contact passif (RCIC) de type lecteur.

12. Dispositif NFC selon la revendication 11, dans lequel l'organe intermédiaire (HC, HP2) est également configuré pour :
- émettre par l'intermédiaire de l'interface de communication sans contact (CLF) des secondes commandes d'application lecteur (CAPDU2) permettant de gérer une communication avec un circuit intégré sans contact passif de type lecteur, et
- recevoir par l'intermédiaire de l'interface de communication sans contact (CLF) des secondes réponses d'application carte (RAPDU2) émises par un circuit intégré sans contact passif de type lecteur,
- encapsuler dans des secondes commandes d'application lecteur (CAPDU2) des premières réponses d'application carte (RAPDU1) fournies par le premier processeur hôte (HP1) et transmettre les secondes commandes d'application lecteur (CAPDU2) par l'intermédiaire de l'interface de communication sans contact, et
- recevoir, par l'intermédiaire de l'interface de communication sans contact, des secondes réponses d'application carte (RAPDU2) dans lesquelles sont encapsulées des premières commandes d'application lecteur (CAPDU1), désencapsuler les premières commandes d'application lecteur (CAPDU1) et les transférer au premier processeur hôte (HP1).

13. Dispositif NFC selon l'une des revendications 11 et 12, dans lequel l'organe intermédiaire (NFCC, HP2) est également configuré pour fournir au premier processeur hôte (HP1) des commandes d'interface HCI choisies de manière à faire croire au premier processeur hôte que les premières commandes d'application lecteur (CAPDU1) reçues d'un circuit intégré sans contact (RCIC) sont émises par un lecteur NFC dans le mode actif.

14. Dispositif NFC selon l'une des revendications 11 à 13, dans lequel l'organe intermédiaire (NFCC, HP2) est également configuré pour fournir au premier processeur hôte (HP1) des paramètres de canal RF choisis de manière à faire croire au premier processeur hôte que des commandes d'application lecteur (CAPDU1) reçues d'un circuit intégré sans contact (RCIC) sont émises par un lecteur NFC dans le mode actif.

15. Dispositif NFC selon l'une des revendications 11 à 14, dans lequel l'organe intermédiaire est un contrôleur hôte (HC) ou un second processeur hôte (HP2) du dispositif NFC.

16. Dispositif portatif (HD), **caractérisé en ce qu'**il comprend un dispositif NFC selon l'une des revendications 11 à 15.

## Patentansprüche

1. Verfahren zur Durchführung einer Transaktion zwischen einer NFC-Vorrichtung und einer passiven kontaktlosen integrierten Schaltung (RCIC), wobei die NFC-Vorrichtung folgendes umfasst:
- einen NFC-Kontroller (NFCC), der mit einer kontaktlosen Kommunikationsschnittstelle (CLF) gekoppelt ist, und
- wenigstens einen ersten Host-Prozessor (HP1), der wenigstens ein Kartenanwendungsprogramm (CAPi) umfasst,
**dadurch gekennzeichnet, dass** es Schritte umfasst, die darin bestehen:
- in der kontaktlosen integrierten Schaltung (RCIC) wenigstens ein Leseranwendungsemulationsprogramm (RAEP) vorzusehen, das konfiguriert ist, um erste Leseranwendungsbefehle (CAPDU1) zu liefern und erste Kartenanwendungsantworten (RAPDU1) zu verarbeiten, und
- anhand eines Zwischenelementes (HC, HP2) der NFC-Vorrichtung:
- die kontaktlose Kommunikationsschnittstelle (CLF) in einen aktiven Modus zu schalten, bei dem sie ein Magnetfeld aussendet, und eine Kommunikation mit der kontaktlosen integrierten Schaltung (RCIC) aufzubauen,
- erste Leseranwendungsbefehle (CAPDU1) aus der kontaktlosen integrierten Schaltung (RCIC) zu empfangen und sie auf den ersten Host-Prozessor (HP1) zu übertragen, und
- erste Kartenanwendungsantworten (RAPDU1) aus dem ersten Host-Prozessor (HP1) zu empfangen und sie auf die integrierte kontaktlose Schaltung (RCIC) zu übertragen.

2. Verfahren nach Anspruch 1, umfassend Schritte, die darin bestehen:
- im Zwischenelement (HC, HP2) ein erstes Protokollvertauschungsprogramm (PINVP1, PINVP3) vorzusehen,
- in der kontaktlosen integrierten Schaltung (RCIC) ein zweites Protokollvertauschungsprogramm (PINVP2) vorzusehen, das konfiguriert ist, um mit dem Leseranwendungsemulationsprogramm (RAEP) mitzuwirken,
- zwischen dem ersten und dem zweiten Vertauschungsprogramm eine kontaktlose Kommunikation aufzubauen, bei der das Zwischenelement (HC, HP2) als Leser im Verhältnis zu der kontaktlosen integrierten Schaltung (RCIC) wirkt, und
- über das zweite und das erste Vertauschungsprogramm:
- erste Leseranwendungsbefehle (CAPDU1) auf den ersten Host-Prozessor (HP1) zu übertragen, die vom Leseranwendungsemulationsprogramm (RAEP) geliefert werden, und
- erste Kartenanwendungsantworten (RAPDU1) auf das Leseranwendungsemulationsprogramm (RAEP) zu übertragen, die von der Kartenanwendung (CAPi) des ersten Host-Prozessors geliefert werden.

3. Verfahren nach einem der Ansprüche 1 und 2, umfassend die folgenden Schritte, die durch das Zwischenelement durchgeführt werden:
- erste Kartenanwendungsantworten (RAPDU1) aus dem ersten Host-Prozessor (HP1) zu empfangen, sie in zweite Leseranwendungsbefehle (CAPDU2) einzukapseln und die zweiten Leseranwendungsbefehle (CAPDU2) auf die kontaktlose integrierte Schaltung (RCIC) zu übertragen,
- erste in zweiten Kartenanwendungsantworten (RAPDU2) eingekapselte Leseranwendungsbefehle (CAPDU1) aus der kontaktlosen integrierten Schaltung (RCIC) zu empfangen, die ersten Leseranwendungsbefehle (CAPDU1) zu entkapseln und sie auf den ersten Host-Prozessor (HP1) zu übertragen.

4. Verfahren nach einem der Ansprüche 1 bis 3, bei dem die ersten vom Leseranwendungsemulationsprogramm ausgesendeten Leseranwendungsbefehle (CAPDU1) und die ersten vom Kartenanwendungsprogramm (CAPi) ausgesendeten Kartenanwendungsantworten im APDU-Format ISO 7816 sind.

5. Verfahren nach einem der Ansprüche 1 bis 4, umfassend einen Schritt, der darin besteht, anhand des Zwischenelementes (NFCC, HP2) HCI-Schnittstellenbefehle an den ersten Host-Prozessor (HP1) zu liefern, die gewählt sind, um den ersten Host-Prozessor glauben zu machen, dass die ersten aus der kontaktlosen integrierten Schaltung (RCIC) empfangenen Leseranwendungsbefehle (CAPDU1) von einem NFC-Leser im aktiven Modus ausgesendet werden.

6. Verfahren nach einem der Ansprüche 1 bis 5, umfassend einen Schritt, der darin besteht, dem ersten Host-Prozessor (HP1) RF-Kanal-Parameter in einem Register zur Verfügung zu stellen, die gewählt sind, um den ersten Host-Prozessor glauben zu machen, dass die ersten aus der kontaktlosen integrierten Schaltung (RCIC) empfangenen Leseranwendungsbefehle (CAPDU1) von einem NFC-Leser im aktiven Modus ausgesendet werden.

7. Verfahren nach einem der Ansprüche 1 bis 6, bei dem das Zwischenelement ein Host-Kontroller (HC) der NFC-Vorrichtung ist.

8. Verfahren nach einem der Ansprüche 1 bis 7, bei dem das Zwischenelement ein zweiter Host-Prozessor (HP2) der NFC-Vorrichtung ist.

9. Kontaktlose integrierte Schaltung (RCIC) vom passiven Typ, die auf einem festen oder portablen Träger angeordnet ist oder bestimmt ist, fest mit einem festen oder portablen Träger verbunden zu werden, umfassend:
- ein NFC-Leser-Emulationsprogramm (RAEP), das konfiguriert ist, um erste Leseranwendungsbefehle (CAPDU1) zu liefern und erste als Antwort auf Leseranwendungsbefehle empfangene Kartenanwendungsantworten (RAPDU1) zu verarbeiten, **dadurch gekennzeichnet, dass** sie folgendes umfasst:
- ein Protokollvertauschungsprogramm (PINVP2), das konfiguriert ist, um:
- auf zweite Leseranwendungsbefehle (CAPDU2) zu antworten, indem zweite Kartenanwendungsantworten (RAPDU2) geliefert werden,
- die ersten vom NFC-Leser-Emulationsprogramm (RAEP) gelieferten Leseranwendungsbefehle (CAPDU1) in die zweiten Kartenanwendungsantworten (RAPDU2) einzukapseln, und
- die ersten in den zweiten Leseranwendungsbefehlen (CAPDU2) eingekapselten Kartenanwendungsantworten (RAPDU1) zu empfangen.

10. Kontaktlose integrierte Schaltung (RCIC) nach Anspruch 9, die konfiguriert ist, um:
- erste Kartenanwendungsantworten (RAPDU1) und zweite Leseranwendungsbefehle (CAPDU2) im APDU-Format ISO 7816 zu empfangen, und
- erste Leseranwendungsbefehle (CAPDU1) und zweite Kartenanwendungsantworten (RAPDU2) im APDU-Format ISO 7816 auszusenden.

11. NFC-Vorrichtung umfassend:
- einen NFC-Kontroller (NFCC), der mit einer kontaktlosen Kommunikationsschnittstelle (CLF) gekoppelt ist, und
- einen ersten Host-Prozessor (HP1), der wenigstens ein Kartenanwendungsprogramm (CAPi) umfasst und der konfiguriert ist, um erste Leseranwendungsbefehle (CAPDU1) zu verarbeiten und erste Kartenanwendungsantworten (RAPDU1) zu liefern,
**dadurch gekennzeichnet, dass** sie ein Zwischenelement (HC, HP2) umfasst, um eine Transaktion zwischen dem Host-Prozessor (HP1) und einer passiven kontaktlosen integrierten Schaltung (RCIC) vom Typ Leser zu koordinieren, wobei das Zwischenelement konfiguriert ist, um:
- die kontaktlose Kommunikationsschnittstelle (CLF) in einen aktiven Modus zu schalten, bei dem sie ein Magnetfeld aussendet,
- über die kontaktlose Kommunikationsschnittstelle im aktiven Modus erste Leseranwendungsbefehle (CAPDU1) zu empfangen, die von einer passiven kontaktlosen integrierten Schaltung vom Typ Leser ausgesendet werden, und sie auf den ersten Host-Prozessor (HP1) zu übertragen, und
- erste vom ersten Host-Prozessor (HP1) gelieferte Kartenanwendungsantworten (RAPDU1) zu empfangen und sie über die kontaktlose Kommunikationsschnittstelle im aktiven Modus auf die passive kontaktlose integrierte Schaltung (RCIC) vom Typ Leser zu übertragen.

12. NFC-Vorrichtung nach Anspruch 11, bei der das Zwischenelement (HC, HP2) außerdem konfiguriert ist, um:
- über die kontaktlose Kommunikationsschnittstelle (CLF) zweite Leseranwendungsbefehle (CAPDU2) auszusenden, die es ermöglichen, eine Kommunikation mit einer passiven kontaktlosen integrierten Schaltung vom Typ Leser zu verwalten, und
- über die kontaktlose Kommunikationsschnittstelle (CLF) zweite Kartenanwendungsantworten (RAPDU2) zu empfangen, die von einer passiven kontaktlosen integrierten Schaltung vom Typ Leser ausgesendet werden,
- erste vom ersten Host-Prozessor (HP1) gelieferte Kartenanwendungsantworten (RAPDU1) in zweite Leseranwendungsbefehle (CAPDU2) einzukapseln und die zweiten Leseranwendungsbefehle (CAPDU2) über die kontaktlose Kommunikationsschnittstelle zu übertragen, und
- über die kontaktlose Kommunikationsschnittstelle, zweite Kartenanwendungsantworten (RAPDU2) zu empfangen, in denen erste Leseranwendungsbefehle (CAPDU1) eingekapselt sind, die ersten Leseranwendungsbefehle (CAPDU1) zu entkapseln und sie auf den ersten Host-Prozessor (HP1) zu übertragen.

13. NFC-Vorrichtung nach einem der Ansprüche 11 und 12, bei der das Zwischenelement (NFCC, HP2) außerdem konfiguriert ist, um an den ersten Host-Prozessor (HP1) HCI-Schnittstellenbefehle zu liefern, die gewählt sind, um den ersten Host-Prozessor glauben zu machen, dass die ersten aus einer kontaktlosen integrierten Schaltung (RCIC) empfangenen Leseranwendungsbefehle (CAPDU1) von einem NFC-Leser im aktiven Modus ausgesendet werden.

14. NFC-Vorrichtung nach einem der Ansprüche 11 bis 13, bei der das Zwischenelement (NFCC, HP2) außerdem konfiguriert ist, um an den ersten Host-Prozessor (HP1) RF-Kanal-Parameter zu liefern, die gewählt sind, um den ersten Host-Prozessor glauben zu machen, dass aus einer kontaktlosen integrierten Schaltung (RCIC) empfangene Leseranwendungsbefehle (CAPDU1) von einem NFC-Leser im aktiven Modus ausgesendet werden.

15. NFC-Vorrichtung nach einem der Ansprüche 11 bis 14, bei der das Zwischenelement ein Host-Kontroller (HC) oder ein zweiter Host-Prozessor (HP2) der NFC-Vorrichtung ist.

16. Tragbare Vorrichtung (HD), **dadurch gekennzeichnet, dass** sie eine NFC-Vorrichtung nach einem der Ansprüche 11 bis 15 umfasst.

## Claims

1. A method of conducting a transaction between an NFC device and a passive contactless integrated circuit (RCIC), the NFC device comprising:
- an NFC controller (NFCC) coupled to a contactless communication interface (CLF), and
- at least a first host processor (HP1) comprising at least one card application program (CAPi);
the method **characterized in that** it comprises the steps of:
- providing in the contactless integrated circuit (RCIC) at least one reader application emulation program (RAEP) configured to supply first reader application commands (CAPDU1) and to treat first card application responses (RAPDU1), and
- by means of an intermediary unit (HC, HP2) of the NFC device:
- setting the contactless communication interface (CLF) in an active mode where it emits a magnetic field and establishes a communication with the contactless integrated circuit (RCIC);
- receiving from the contactless integrated circuit (RCIC) first reader application commands (CAPDU1) and transferring them to the first host processor (HP1), and
- receiving from the first host processor (HP1) first card application responses (RAPDU1) and transferring them to the contactless integrated circuit (RCIC).

2. A method according to claim 1, comprising:
- providing in the intermediary unit (HC, HP2) a first protocol inversion program (PINVP1, PINVP3),
- providing in the contactless integrated circuit (RCIC) a second protocol inversion program (PINVP2) configured to cooperate with the reader application emulation program (RAEP),
- establishing between the first and the second inversion programs a contactless communication wherein the intermediary unit (HC, HP2) acts as a reader relative to the contactless integrated circuit (RCIC), and
- by the intermediary of the second and the first inversion programs:
- transferring to the first host processor (HP1) first reader application commands (CAPDU1) supplied by the reader application emulation program (RAEP), and
- transferring to the reader application emulation program (RAEP) first card application responses (RAPDU1) supplied by the card application (CAPi) of the first host processor.

3. A method according to one of claims 1 and 2, comprising the following steps conducted by the intermediary unit:
- receiving from the first host processor (HP1) first card application responses (RAPDU1), encapsulating them in second reader application commands (CAPDU2) and transferring the second reader application commands (CAPDU2) to the contactless integrated circuit (RCIC),
- receiving from the contactless integrated circuit (RCIC), first reader application commands (CAPDU1) encapsulated in second card application responses (RAPDU2), de-encapsulating the first reader application commands (CAPDU1) and transferring them to the first host processor (HP1).

4. A method according to one of claims 1 to 3, wherein the first reader application commands (CAPDU1) emitted by the reader application emulation program and the first card application responses emitted by the card application program (CAPi) are in the APDU ISO 7816 format.

5. A method according to one of claims 1 to 4, comprising the step of supplying to the first host processor (HP1) by means of the intermediary unit (NFCC, HP2), HCI interface commands chosen in a manner so as to make the first host processor believe that the first reader application commands (CAPDU1) received from the contactless integrated circuit (RCIC) are emitted by an NFC reader in the active mode.

6. A method according to one of claims 1 to 5, comprising the step consisting of putting in a registry at the disposition of the first host processor (HP1), RF channel parameters chosen in a manner so as to make the first host processor believe that the first reader application commands (CAPDU1) received from the contactless integrated circuit (RCIC) are emitted by an NFC reader in the active mode.

7. A method according to one of claims 1 to 6, wherein the intermediary unit is a host controller (HC) of the NFC device.

8. A method according to one of claims 1 to 7, wherein the intermediary unit is a second host processor (HP2) of the NFC device.

9. A contactless integrated circuit (RCIC) of the passive type arranged or to be arranged on or within a fixed or portable support, comprising :
- an NFC reader emulation program (RAEP) and configured to supply first reader application commands (CAPDU1) and to treat first card application responses (RAPDU1) received in response to reader application commands, **characterized in that** it further comprises :
- a protocol inversion program (PINVP2) configured to :
- respond to second reader application commands (CAPDU2) by supplying second card application responses (RAPDU2),
- encapsulate in the second card application responses (RAPDU2) the first reader application commands (CAPDU1) supplied by the NFC reader emulation program (RAEP), and
- receive the first card application responses (RAPDU1) encapsulated in the second reader application commands (CAPDU2)

10. A contactless integrated circuit (RCIC) according to claim 9, configured to:
- receive first card application responses (RAPDU1) and second reader application commands (CAPDU2) in the APDU ISO 7816 format, and
- emit first reader application commands (CAPDU1) and second card application responses (RAPDU2) in the APDU ISO 7816 format.

11. An NFC device comprising:
- an NFC controller (NFCC) coupled to a contactless communication interface (CLF), and
- a first host processor (HP1) comprising at least one card application program (CAPi) and configured to treat first reader application commands (CAPDU1) and to supply first card application responses (RAPDU1),
**characterized in that** it comprises an intermediary unit (HC, HP2) to coordinate a transaction between the host processor (HP1) and a passive contactless integrated circuit (RCIC) of the reader type, the intermediary unit being configured to:
- set the contactless communication interface (CLF) in an active mode where it emits a magnetic field,
- receive, by the intermediary of the contactless communication interface in active mode, first reader application commands (CAPDU1) emitted by a passive contactless integrated circuit of the reader type and transfer them to the first host processor (HP1), and
- receive first card application responses (RAPDU1) supplied by the first host processor (HP1) and transfer them, by the intermediary of the contactless communication interface in active mode, to the passive contactless integrated circuit (RCIC) of the reader type.

12. An NFC device according to claim 11, wherein the intermediary unit (HC, HP2) is also configured to:
- emit by the intermediary of the contactless communication interface (CLF) second reader application commands (CAPDU2) allowing for the management of a communication with a passive contactless integrated circuit of the reader type, and
- receive by the intermediary of the contactless communication interface (CLF), second card application responses (RAPDU2) emitted by a passive contactless integrated circuit of the reader type,
- encapsulate in second reader application commands (CAPDU2) first card application responses (RAPDU1) supplied by the first host processor (HP1) and transmit the second reader application commands (CAPDU2) by the intermediary of the contactless communication interface, and
- receive, by the intermediary of the contactless communication interface, second card application responses (RAPDU2) within which are encapsulated first reader application commands (CAPDU1), de-encapsulate the first reader application commands (CAPDU1), and transfer them to the first host processor (HP1).

13. An NFC device according to one of claims 11 and 12, wherein the intermediary unit (NFCC, HP2) is also configured to supply to the first host processor (HP1) HCI interface commands chosen in a manner so as to make the first host processor believe that the first reader application commands (CAPDU1) received from a contactless integrated circuit (RCIC) are emitted by an NFC reader in the active mode.

14. An NFC device according to one of claims 11 to 13, wherein the intermediary unit (NFCC, HP2) is also configured to supply to the first host processor (HP1) RF channel parameters chosen in a manner so as to make the first host processor believe that reader application commands (CAPDU1) received from a contactless integrated circuit (RCIC) are emitted by an NFC reader in the active mode.

15. An NFC device according to one of claims 11 to 14, wherein the intermediary unit is a host controller (HC) or a second host processor (HP2) of the NFC device.

16. A portable device (HD), **characterized in that** it comprises an NFC device according to one of claims 11 to 15.
